# EUROPEAN PATENT APPLICATION

(11) **EP 3 840 358 A1**
(43) Date of publication of application: **23.06.2021**
(21) Application number: 18941160.6
(22) Date of filing: 28.11.2018
(51) Int. Cl.: H04N 5/232

(54) **MODE SWITCHING METHOD AND DEVICE FOR TRIPOD HEAD, MOVABLE PLATFORM, AND STORAGE MEDIUM**

(71) Applicant: SZ DJI Technology Co., Ltd., Shenzhen, Guangdong 518057 (CN)
(72) Inventor: WANG, Yingzhi, Shenzhen, Guangdong 518057 (CN)
(74) Representative: Appelt, Christian W.
(86) International application number: PCT/CN2018/118005
(87) International publication number: WO 2020/107284

(57) **Abstract**

The present disclosure provides a gimbal mode switching method, a device, a mobile platform, and a storage medium. The method includes: obtaining a mode switching instruction of a user, the mode switching instruction being configured to switch a gimbal from a first mode to a second mode, a number of fixed joint angles in the first mode being greater than a number of fixed joint angles in the second mode; determining a first attitude angle of the gimbal in the first mode, and determining a second attitude angle of the gimbal in the second mode according to the first attitude angle; and according to the second attitude angle, performing value assignment with respect to an initial attitude of the gimbal in the second mode to switch the gimbal from the first mode to the second mode. The disclosure not only implements a smooth switching from the first mode to the second mode, but also effectively prevents a loss of a target.

## Description

### TECHNICAL FIELD

The present disclosure relates to the technical field of gimbal mode switching, in particular to relates to a method, a device, a mobile platform and a storage medium for gimbal mode switching.

### BACKGROUND TECHNOLOGY

In operation modes of a gimbal, a first person view (FPV) mode refers to fixing the joint angle of the gimbal's rotation axis, and controlling the movement of the gimbal by controlling the movement of the handle. A tracking mode refers to that the camera keeps aiming at a tracked target when controlling the gimbal to photograph, which is often used for tracking photography. In the actual use of the gimbal, if a target framed in the FPV mode needs to be tracked, the gimbal may switch from the FPV mode to the tracking mode.

In the existing technology, when switching the gimbal from the FPV mode to the tracking mode, in order to prevent the gimbal from being abnormal, the gimbal usually performs a restart operation, and after the restart, the gimbal returns to the center, or the gimbal may be forced back to the center, then may be switched to the tracking mode to track the tracked target.

However, in the existing technology, when the gimbal is switched from the FPV mode to the tracking mode, the gimbal returns to the center, which can cause abrupt changes to the view angle of the captured image and result in a loss of the target.

### SUMMARY OF THE DISCLOSURE

The embodiments of the present disclosure provide a method, a device, a mobile platform, and a storage medium for gimbal mode switching.

According to a first aspect, the present disclosure provides a method for gimbal mode switching, including: obtaining a user's mode switching instruction, the mode switching instruction being configured to switch a gimbal from a first mode to a second mode, a number of fixed joint angles in the first mode being greater than a number of fixed joint angles in the second mode; determining a first attitude angle of the gimbal in the first mode, and determining a second attitude angle of the gimbal in the second mode according to the first attitude angle; and according to the second attitude angle, performing value assignment with respect to an initial attitude of the gimbal in the second mode to switch the gimbal from the first mode to the second mode.

According to a second aspect, the present disclosure provides a method for mode switching of a gimbal, including: obtaining a user's mode switching instruction, the mode switching instruction being configured to switch the gimbal from the second mode to the first mode, and a number of fixed joint angles in the first mode being greater than a number of fixed joint angles in the second mode; determining a third attitude angle of the gimbal in the second mode, and determining a fourth attitude angle of the gimbal in the first mode according to the third attitude angle; and according to a fourth attitude angle, performing value assignment with respect to an initial attitude of the gimbal in the first mode to switch the gimbal from the second mode to the first mode.

According to a third aspect, the present disclosure provides a gimbal mode switching device, including: a first acquisition module configured to obtain a user's mode switching instruction, the mode switching instruction being configured to switch a gimbal from a first mode to a second mode, and a number of fixed joint angles in the first mode being greater than a number of fixed joint angles in the second mode; a first determination module configured to determine a first attitude angle of the gimbal in the first mode and determine a second attitude angle of the gimbal in the second mode according to the first attitude angle; and a first switching module configured to performing value assignment with respect to an initial attitude of the gimbal in the second mode according to the second attitude angle, to switch the gimbal from the first mode to the second mode.

According to a fourth aspect, the present disclosure provides a gimbal mode switching device, including: a second acquisition module configured to obtain a user's mode switching instruction, the mode switching instruction being configured to switch a second mode of the gimbal to a first mode, the number of fixed joint angles in the first mode being greater than a number of fixed joint angles in the second mode; a second determination module configured to determine a third attitude angle of the gimbal in the second mode and determine a fourth attitude angle of the gimbal in the first mode according to the third attitude angle; and a second switching module configured to perform value assignment with respect to an initial attitude of the gimbal in the first mode according to the fourth attitude angle to switch the gimbal from the second mode to the first mode.

According to a fifth aspect, the present disclosure provides a mobile platform, including: a body, and a gimbal. The gimbal is disposed on the body and the gimbal includes a processor. The processor is configured to: obtain a user's mode switching instruction, the mode switching instruction being configured to switch the gimbal from the first mode to the second mode, a number of fixed joint angles in the first mode being greater than a number of fixed joint angles in the second mode; determine a first attitude angle of the gimbal in the first mode and determine a second attitude angle of the gimbal in the second mode according to the first attitude angle; and according to the second attitude angle, performing value assignment with respect to an initial attitude of the gimbal in the second mode to switch the gimbal from the first mode to the second mode.

According to a sixth aspect, the present disclosure provides a computer-readable storage medium that stores a computer program. The computer program can be executed by a processor to complete the gimbal mode switching method described in the first aspect.

The embodiments of the present disclosure provide a method, a device, a mobile platform, and a storage medium for gimbal mode switching. By obtaining a user's mode switching instruction, the mode switching instruction being configured to switch a gimbal from a first mode to a second mode, a number of fixed joint angles in the first mode being greater than a number of fixed joint angles in the second mode; determining a first attitude angle of the gimbal in the first mode, and determining a second attitude of the gimbal in the second mode according to the first attitude angle; performing value assignment with respect to an initial attitude of the gimbal in the second mode according to the second attitude angle, the gimbal is switched from the first mode to the second mode. During the process of switching the gimbal from the first mode to the second mode, the second attitude angle of the gimbal in the second mode can be determined according to the first attitude angle of the gimbal in the first mode. The smooth switching to the second mode effectively prevents a loss of a target in a camera device connected to the gimbal.

Additional aspects and advantages of the embodiments of the present disclosure will be partially given in the following description, and some may become apparent from the following description, or be learned through the practice of the disclosure.

### BRIEF DESCRIPTION OF THE DRAWINGS

In order to more clearly explain the embodiments of the present disclosure or the technical solutions in the existing technology, the following will briefly introduce the drawings used in the description of the embodiments or the existing technology. Apparently, the drawings in the following description are some embodiments of the present disclosure. For those of ordinary skill in the art, other drawings can be obtained based on these drawings without making any creative efforts.
FIG. 1 is a flowchart of a method for gimbal mode switching according to an embodiment of the present disclosure;
FIG. 2 is a flowchart of the method for gimbal mode switching according to another embodiment of the present disclosure;
FIG. 3 is a schematic diagram of establishing a coordinate system with a gimbal base according to an embodiment of the present disclosure;
FIG. 4 is a schematic diagram of a pitch angle of gravity mapped on a base according to an embodiment of the present disclosure;
FIG. 5 is a schematic flowchart of the method for gimbal switching mode according to another embodiment of the present disclosure;
FIG. 6 is a schematic diagram of a gimbal mode switching device according to an embodiment of the present disclosure;
FIG. 7 is a schematic diagram of the gimbal mode switching device according to another embodiment of the present disclosure;
FIG. 8 is a schematic diagram of the gimbal mode switching device according to another embodiment of the present disclosure;
FIG. 9 is a schematic diagram of the gimbal mode switching device according to another embodiment of the present disclosure;
FIG. 10 is a schematic diagram of the gimbal mode switching device according to another embodiment of the present disclosure;
FIG, 11 is a schematic diagram of the gimbal mode switching device according to another embodiment of the present disclosure; and
FIG. 12 is a schematic structural diagram of a mobile platform according to an embodiment of the present disclosure.

### DETAILED DESCRIPTION OF THE EMBODIMENTS

To make the objective, technical solutions, and advantages of the embodiments of the present disclosure clearer, the technical solutions in the embodiments of the present disclosure will be described clearly and completely in conjunction with the drawings in the embodiments of the present disclosure. Apparently, the described embodiments are part of the embodiments of the present disclosure, but not all the embodiments. Based on the embodiments of the present disclosure, all other embodiments obtained by a person of ordinary skill in the art without making creative efforts fall within the scope of the disclosure.

The terms "first", "second", "third", "fourth", etc., if any, in the description and claims of the present disclosure and the above drawings are used to distinguish similar objects, and do not have to be used to describe a specific order or sequence. It should be understood that the data used in this way can be interchanged under appropriate circumstances, so that the embodiments of the present disclosure described herein can be implemented in an order other than those illustrated or described herein. In addition, the terms "including", "having", and any variations thereof are intended to cover non-exclusive inclusions, for example, processes, methods, systems, products or devices that contain a series of steps or units need not be limited to those clearly listed steps or units, but may include other steps or units not explicitly listed or inherent to these processes, methods, products, or equipment.

In operation modes of a gimbal, if a target needs to be tracked in an FPV mode, the gimbal can be switched from the FPV mode to a tracking mode. When switching the gimbal from the FPV mode to the tracking mode, under normal circumstances, in order to prevent the gimbal from being abnormal, the gimbal may return to the center after performing a restart operation, or the gimbal can be forced back to the center then switched to the tracking mode to track the tracked target. However, when the gimbal is switched back from the FPV mode to the tracking mode, it may cause abrupt changes to view angle of the captured image, which may result in a loss of a target. In order to prevent the loss of the target and implement smooth switching of the gimbal from the FPV mode to the tracking mode, the embodiments of the present disclosure provide a method, a device, a mobile platform, and a storage medium for gimbal mode switching.

The following briefly introduces the application scenarios of the embodiments of the present disclosure:
In the process of using the gimbal for photographing, if a moving target is selected for tracking and photographing in the FPV mode, the gimbal can be switched from the FPV mode to the tracking mode, and the gimbal can control the camera to focus at the tracked target in the tracking mode during photographing. Accordingly, it can be avoided that during a user's manual tracking of a target, when switching the gimbal from the FPV mode to the tracking mode, due to the return process of the gimbal, abrupt changes to the view angle of the captured image may occur during the return process, which can cause the framed target that is selected in the FPV mode to disappear from the image when switching the gimbal to the tracking mode. Based on this, the embodiments of the present disclosure provide a method, a device, a mobile platform, and a storage medium for gimbal mode switching.

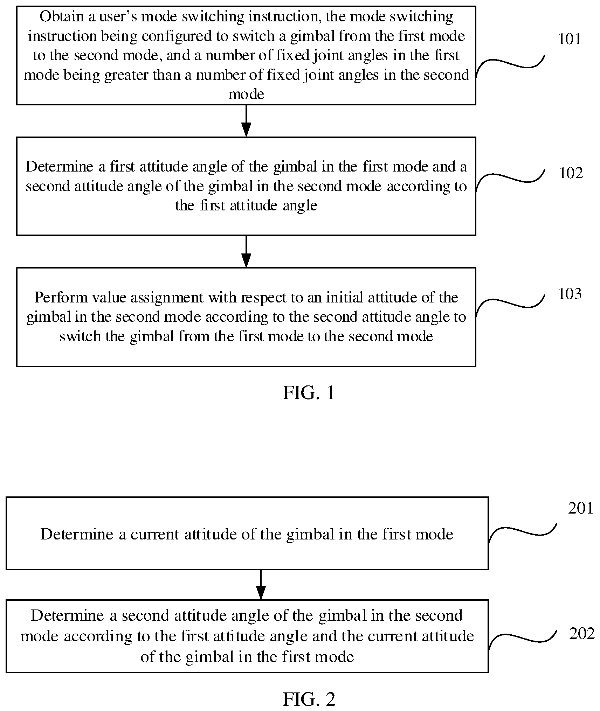

FIG. 1 is a flowchart of a method for gimbal mode switching according to an embodiment of the present disclosure. As shown in FIG. 1, the method for switching a gimbal according to an embodiment of the present disclosure may include:
S101: Obtaining a user's mode switching instruction. The mode switching instruction is configured to switch a gimbal from the first mode to the second mode. A number of fixed joint angles in the first mode is greater than a number of fixed joint angles in the second mode.

The gimbal is a device configured to install and fix a camera. The specific structure and model of the gimbal may not be limited to this embodiment of the present disclosure. The gimbal may be a hand-held gimbal or be fixed on a mobile device. For example, the gimbal in the embodiment of the present disclosure may be a two-axis gimbal, a three-axis gimbal, a four-axis gimbal, and so on. The implementation of the present disclosure does not limit the number of the axes of the gimbal.

Obtaining the user's mode switching instruction can be implemented by touching a button on a base of the gimbal, or triggering a button on an application connected to the gimbal, etc. The embodiment of the present disclosure does not limit the method of obtaining the user's mode switching instruction. The operating process includes multiple modes, such as FPV mode, tracking mode, and free mode. In different modes, fixed number of joint angles of the gimbal may be different. By controlling attitude angle of the gimbal or the joint angle of the gimbal, the mode, position, and attitude of the gimbal can be controlled.

The gimbal may be switched from the first mode to the second mode. A number of fixed joint angles in the first mode is greater than a number of fixed joint angles in the second mode. Taking the three-axis gimbal as an example, e.g., if the number of the fixed joint angle in the first mode is three, the number of the fixed joint angles in the second mode is one or two. If the number of the fixed joint angles in the first mode is two, the number of the fixed joint angles in the second mode is one. In the second mode, the number of the fixed joint angles is at least one. The embodiment of the present disclosure does not limit the specific number of fixed joint angles in the first mode and the second mode. In a possible implementation manner, the first mode can be the FPV mode, the second mode can be the tracking mode, the number of the joint angles fixed by the gimbal in the FPV mode may be three, and the number of the joint angles fixed by the gimbal in the tracking mode may be one or two. In FPV mode, the three joint angles (e.g., pitch angle, yaw angle and roll angle) of the gimbal are fixed, and the pitch angle, yaw angle and roll angle of the gimbal can all move with the base in the axis of the base. In the tracking mode, taking the two joint angles as an example, the two joint angles (e.g., pitch angle and yaw angle) of the gimbal are fixed, and the pitch angle and yaw angle of the gimbal can move with the base in the axis of the base. However, the roll angle of the joint angle of the gimbal may not move with the base, rather the attitude of the roll angle may be maintained. It should be understood that the three-axis gimbal is taken as an example, but there is no limitation to the three-axis gimbal, so the gimbal may also be a two-axis gimbal, a four-axis gimbal, and so on.

S102: Determining a first attitude angle of the gimbal in the first mode and a second attitude angle of the gimbal in the second mode according to the first attitude angle.

In order to ensure that the gimbal achieves smooth switching during the process of switching the gimbal from the first mode to the second mode, the embodiments of the present disclosure further includes: determining a first attitude angle of the gimbal in the first mode. The attitude of the gimbal in the first mode can be obtained according to the joint angle and the attitude of the base of the gimbal in the first mode. The first attitude angle of the gimbal in the first mode may include a first pitch angle, a first yaw angle and a first roll angle of the gimbal, and the second attitude angle of the gimbal in the second mode may include a second pitch angle, a second yaw angle and a second roll angle. The second attitude angle can be determined according to the first attitude angle. In a possible implementation manner, the second pitch angle may be equal to the first pitch angle, the second yaw angle may be equal to the first yaw angle, and the second roll angle may be equal to the first roll angle. The embodiment of the present disclosure does not limit the method for determining the second attitude angle according to the first attitude angle, as long as the gimbal can be smoothly switched from the first mode to the second mode.

S103: Performing value assignment with respect to an initial attitude of the gimbal in the second mode according to the second attitude angle to switch the gimbal from the first mode to the second mode.

According to the second attitude angle determined in step S 102, a value assignment may be performed with respect to an initial attitude of the gimbal in the second mode to switch the gimbal from the first mode to the second mode. Specifically, a second attitude value may be assigned to the gimbal in the second mode as the initial attitude, so that during the process of switching the gimbal from the first mode to the second mode, there can be no abrupt changes to the image.

At the moment of switching the gimbal from the first mode to the second mode, the initial attitude of the second mode is the second attitude, but due to the mode strategy of the second mode, the gimbal cannot maintain the second attitude in the second mode during operation. For example, the second mode may be the tracking mode, and although the initial attitude of the tracking mode is the second attitude, the tracking mode may track the target in the attitude angle of the base. Accordingly, in order to implement tracking the target in the second attitude angle of the tracking mode, in a possible implementation, the embodiments of the present disclosure may further include: performing angle compensation in the second mode, and controlling the gimbal to perform tracking operation based on the second attitude angle.

Controlling the gimbal to perform the tracking operation based on the second attitude angle may include: recording and assigning a value to the compensated attitude angle in the second mode, performing the angle compensation in the second mode to maintain the gimbal to track the base in the initial attitude of the second mode. Taking the second mode as the tracking mode as an example, the tracking strategy of the current tracking mode is to track the base using a difference between the base attitude angle and the compensated attitude angle. During the process of switching the gimbal from the first mode to the tracking mode, a value needs to be assigned to the compensated attitude angle. If no value is assigned to the compensated attitude angle, the compensated attitude angle can be zero, and accordingly, the gimbal tracks the target in the tracking mode in the base attitude, thus the gimbal cannot maintain the second attitude angle to track the base. If a value is assigned to the compensated attitude angle, then in the tracking mode, then the gimbal tracks the base in an angle being the difference between the base attitude angle and the compensated attitude angle, so that the compensated attitude angle is equal to a difference between the base attitude angle and an attitude corresponding to the second attitude angle. According, in the tracking mode, the gimbal tracks the base in the second attitude angle, and the gimbal can maintain the second attitude angle to track the base.

In the mode switching method of the gimbal provided by the embodiments of the present disclosure, a user's mode switching instruction can be obtained. The mode switching instruction is configured to: switch the gimbal from the first mode to the second mode, a number of the fixed joint angles in the first mode being greater than a number of the fixed joint angles in the second mode; determine a first attitude angle of the gimbal in the first mode, and determine a second attitude angle of the gimbal in the second mode according to the first attitude angle; and assign an initial attitude to the gimbal in second the mode to switch the gimbal from the first mode to the second mode. The embodiments of the present disclosure can not only implement smooth switching of the gimbal from the first mode to the second mode, but can also effectively prevent the loss of the target.

Based on the above embodiments, in S102, in order to determine the second attitude angle of the gimbal in the second mode according to the first attitude angle, in a possible implementation manner, FIG. 2 is a flowchart of the method for gimbal mode switching according to another embodiment of the present disclosure. As shown in FIG. 2, determining the second attitude angle of the gimbal in the second mode according to the first attitude angle includes:
S201: Determining a current attitude of the gimbal in the first mode.

The gimbal may have a horizontal photographing mode and a vertical photographing mode during photographing, and a forward photographing mode and a reverse photographing mode in the horizontal photographing mode, and a left vertical photographing mode and a right vertical photographing mode in the vertical photographing mode. When determining the current attitude of the gimbal in the first mode, in a possible implementation, if it is only necessary to determine whether the gimbal mode is in the forward photographing mode or the reverse photographing mode, the current attitude of the gimbal can be determined to be in the forward photographing mode or the reverse photographing mode according to a tilt angle of the base. The tilt angle of the base indicates an angle between the base and the direction of gravity. When the angle between the base and gravity is greater than a forward photographing mode preset value, e.g., π/2, the current attitude of the gimbal is in the forward photographing mode. When the angle between the base and gravity is less than or equal to a reverse photographing mode preset value, e.g., π/2, the current attitude of the gimbal is in the reverse photographing mode. The forward photographing preset value can be consistent or inconsistent with the reverse photographing preset value. If it is necessary to determine whether the gimbal is in the forward photographing mode, the reverse photographing mode, the left vertical photographing mode or the right vertical photographing mode, other conditions may also need to be considered.

In order to determine the current attitude of the gimbal in the first mode, in a possible implementation manner, determining the current attitude of the gimbal in the first mode may include: determining the current attitude of the gimbal in the first mode according to an angle value of gravity mapped in a preset axial direction at a set position of the gimbal.

When the gimbal is in different attitudes, a right-handed Cartesian coordinate system may be established at the set position of the gimbal. As the attitude of the gimbal changes, according to the different mapping directions of gravity in the preset axial direction in the established coordinate system, and according to a mapping angle value of gravity in the preset axial direction in the coordinate system, the current attitude of the gimbal in the first mode can be determined.

The embodiment of the present disclosure does not specifically limit the set position of the gimbal, as long as the coordinate system can be established at the set position of the gimbal, and the current attitude of the gimbal can be determined according to the angle value of gravity mapped in the preset axial direction at the set position of the gimbal. In a possible implementation manner, the set position of the gimbal may include any of: the base, an outer frame, an inner frame, and a middle frame.

The embodiment of the present disclosure does not specifically limit the preset axis of the gimbal, and the coordinate system established according to different set positions may have different preset axes, as long as the current attitude of the gimbal can be determined according to the angle value of gravity mapped in the preset axial direction at the set position of the gimbal. In a possible implementation, the preset axis may include one or more of: a pitch axis, a yaw axis, and a roll axis.

The following description takes establishing a coordinate system at the base as the set position as an example to determine the current attitude of the gimbal in the first mode.

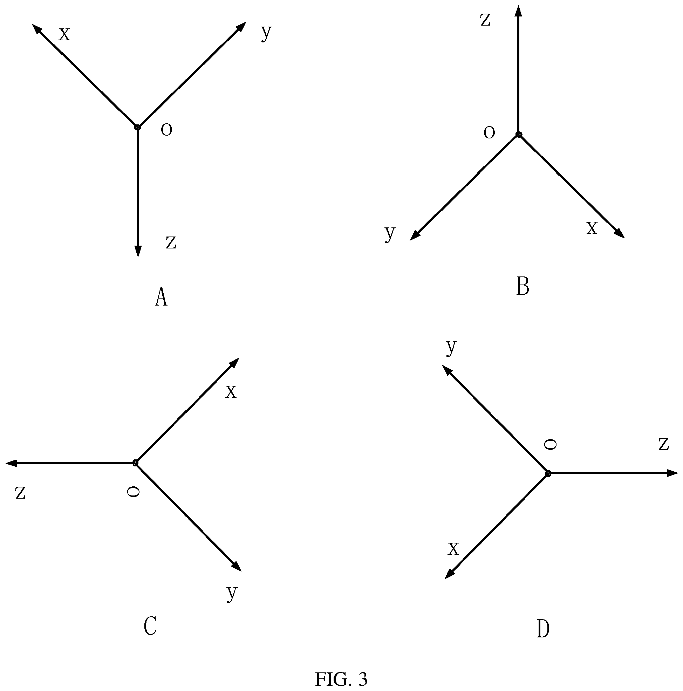

FIG. 3 is a schematic diagram of establishing a coordinate system with a gimbal base according to an embodiment of the present disclosure. As shown in FIG. 3, taking the gimbal in the forward photographing mode as an example, Z axis represents the yaw axis, Y axis represents the pitch axis, X axis represents the roll axis, and the direction from the gimbal to the base is positive direction of Z axis, then Y axis is in the same vertical plane with Z axis, the plane is perpendicular to a horizontal plane, and Y axis is perpendicular to Z axis. X axis is perpendicular to Y axis, and X axis and Y axis are in the same horizontal plane. After the coordinate system is established, the relative position between X axis, Y axis, and Z axis remains unchanged. During rotation process, X axis, Y axis, and Z axis are always perpendicular to each other, the positive direction of Z axis is always the direction from the gimbal to the base, and the relative position of the coordinate system to the base remains unchanged. Regardless of the changes of the gimbal, the direction of gravity is always vertically downward. At this time, the preset axis of gravity on the gimbal base is the pitch axis, and the angle of gravity mapped in the preset axial direction of the gimbal base is the angle between gravity and Y axis. As the position of the base changes, the coordinate system may also change with the position of the base. The following description takes several cases as examples to demonstrate determination of the attitude of the gimbal using the mapping angle value of gravity in the preset axial direction at the set position of the gimbal.

As shown in part A of FIG. 3, Z axis is perpendicular to the horizontal plane, and the gimbal is directly above the base. At this time, the angle between gravity and Y axis is π/2, and the gimbal is in the forward photographing mode. As shown in part B of FIG. 3, Z axis is perpendicular to the horizontal plane, but the gimbal is directly below the base. At this time, the angle between gravity and Y axis is -π/2, and the gimbal is in the reverse photographing mode. As shown in part C of FIG. 3, Z axis is in the horizontal plane, but the gimbal is on the right side of the base. At this time, the angle between gravity and Y axis is 0, and the gimbal is in the left vertical photographing mode. As shown in part D of FIG. 3, Z axis is in the horizontal plane, but the gimbal is on the left side of the base. At this time, the angle between gravity and the Y axis is π, and the gimbal is in the right vertical photographing mode. The determination of the attitude of the gimbal can be implemented by setting the angle range between gravity and Y axis, which is specifically analyzed in the following embodiments.

The angle value of gravity mapped in the preset axial direction at the set position of the gimbal may vary according to the change of the position of the gimbal. In a possible implementation manner, determining the current attitude of the gimbal in the first mode may include: according to the angle value of gravity mapped in the preset axial direction at the set position of the gimbal, determining whether the current attitude of the gimbal is the horizontal photographing mode, the left vertical photographing mode, or the right vertical photographing mode.

According to the angle value of gravity mapped in the preset axial direction of the position of the gimbal, determining whether the current attitude of the gimbal is the horizontal photographing mode, the left vertical photographing mode, or the right vertical photographing mode may be based on the specific set position and the preset axis. The embodiment of the present disclosure does not limit this.

In order to implement the determination of whether the current attitude of the gimbal is the horizontal photographing mode, the left vertical photographing mode, or the right vertical photographing mode according to the mapping angle value of gravity in the preset axial direction at the set position of the gimbal, in a possible implementation manner, according to the angle value of gravity mapped in the preset axial direction at the set position of the gimbal, determining whether the current attitude of the gimbal is the horizontal photographing mode, the left vertical photographing mode, or the right vertical photographing mode may include: if the angle value in the preset axial direction is within a first preset range, determining that the current attitude of the gimbal is in the horizontal photographing mode; if the angle value in the preset axial direction is within a second preset range, determining that the current attitude of the gimbal is in the left vertical photographing mode; if the angle value in the preset axial direction is within a third preset range, determining that the current attitude of the gimbal is in the right vertical photographing mode.

In this solution, the current attitude of the gimbal can be determined according to the different ranges of the angle values of gravity in the preset axial direction at the set position of the gimbal. According to the different set positions and different preset axes, the first preset range, the second preset range, and the third preset range may be different. The embodiment of the present disclosure does not specifically limit the first preset range, the second preset range, and the third preset range, as long as it can be determined whether the gimbal is in the horizontal photographing mode, the left vertical photographing mode or the right vertical photographing mode. The angle value in the preset axial direction may be represented by a specific angle value between gravity and the preset axis, or a sine, cosine, or tangent representation of the angle value between gravity and the preset axis. The embodiment does not limit the manner to represent the angle value in the preset axial direction.

The following description takes the pitch angle as the mapping angle of gravity on the base as an example.

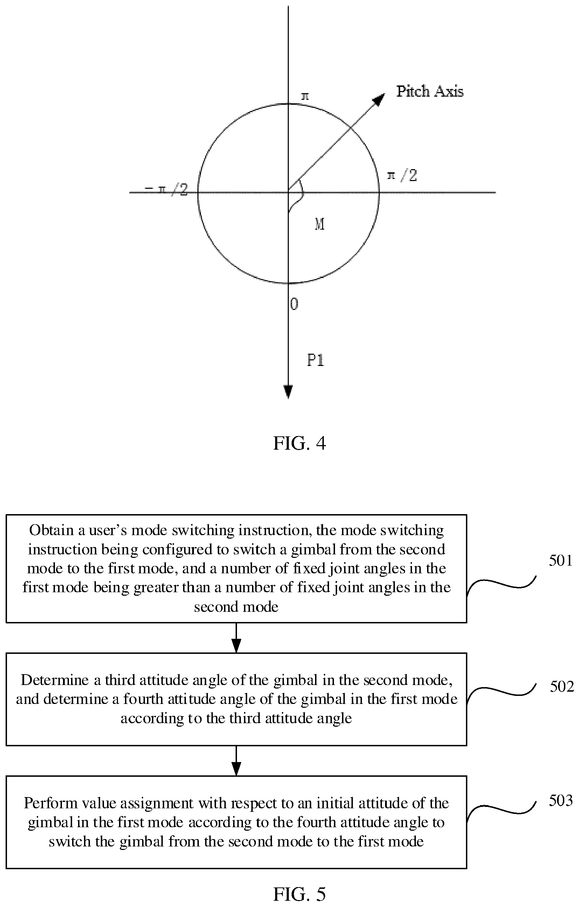

FIG. 4 is a schematic diagram of a pitch angle of gravity mapped on a base according to an embodiment of the present disclosure. As shown in FIG. 4, the direction of gravity is direction PI, which is vertically downward. As the attitude of the gimbal varies continuously, the pitch angle of gravity mapped on the base is shown as FIG. 4. For convenience, a positive or negative sign indicate directions, and the angle is negative when Y axis is on the left and positive when Y axis is on the right. The present disclosure does not limit the manner to represent the angle in the embodiments. The pitch angle of gravity mapped on the base is the angle M between gravity and the pitch axis, and the cosine of angle M ranges from [-1, 1]. The angle value is represented by the cosine of the pitch angle of gravity mapped on the base. In a possible implementation, when the pitch angle of gravity mapped on the outer frame is within the first preset range, it can be determined that the current attitude of the gimbal is in the horizontal photographing mode. The embodiment of the present disclosure does not specifically limit the first preset range. In a possible implementation manner, the first preset range may be [-0.5, 0.5].

When the pitch angle of gravity mapped on the outer frame is within the second range, it can be determined that the current attitude of the gimbal is in the left vertical photographing mode. The embodiment of the present disclosure does not specifically limit the second preset range, and in a possible implementation manner, the second preset range may have an error range within 1. The embodiment of the present disclosure does not specifically limit the error range, as long as the current attitude of the gimbal is in the left vertical photographing mode.

When the pitch angle of gravity mapped on the outer frame is within the third range, it can be determined that the current attitude of the gimbal is in the right vertical photographing mode. The embodiment of the present disclosure does not specifically limit the third preset range, and in a possible implementation manner, the third preset range have an error range within -1. The embodiment of the present disclosure does not specifically limit the error range, as long as the current attitude of the gimbal can be in the right vertical photographing mode.

After determining the current attitude of the gimbal according to the angle value of gravity mapped in the preset axial direction at the set position of the gimbal, it is also necessary to determine whether the current attitude of the gimbal is in the forward photographing mode or the reverse photographing mode.

In a possible implementation manner, in order to determine whether the current attitude of the gimbal is in the forward photographing mode or the reverse photographing mode, the method for gimbal switching mode according to the embodiments of the present disclosure may further include: when determining that the current attitude of the gimbal is in the horizontal photographing mode, determining whether the current attitude of the gimbal is in the forward photographing mode or the reverse photographing mode according to the tilt angle of the base. The tilt angle of the base is the angle between the base and the direction of gravity.

The direction from the gimbal to the base indicates the direction of the base, the angle between the base and the direction of gravity is the angle between the direction from the gimbal to the base and the direction of gravity. When the angle between the base and gravity is greater than the first angle value, the gimbal is above the base. The first angle value is greater than or equal to π/2, and the current attitude of the gimbal is in the forward photographing mode. When the angle between the base and gravity is less than the second angle value, the gimbal is below the base. The second angle value is less than or equal to π/2, and the current attitude of the gimbal is in the reverse photographing mode. The embodiment of the present disclosure does not specifically limit the first angle value and the second angle value, as long as it can be determined whether the current attitude of the gimbal is in the forward photographing mode or the reverse photographing mode.

Optionally, if it can be determined that the gimbal is in the horizontal photographing mode, and the tilt angle of the base is greater than π/2, then the current attitude of the gimbal is in the forward photographing mode; if it can be determined that the gimbal is in the horizontal photographing mode and the tilt angle of the base is less than or equal to π/2, then the current attitude of the gimbal is in the reverse photographing mode.

Step S202: Determining a second attitude angle of the gimbal in the second mode according to the first attitude angle and the current attitude of the gimbal in the first mode.

After determining that the current attitude of the gimbal in the first mode, the second attitude angle of the gimbal in the second mode can be determined according to the first attitude angle and the current attitude of the gimbal in the first mode. In the process of switching the gimbal from the first mode to the second mode, the number of the fixed joint angles is decreasing. During the process of assigning a value to the second attitude angle, the second attitude of the joint angle fixed in the second mode can be selected and be assigned as the value to the first attitude angle. The second attitude angle of the non-fixed joint angle in the second mode may be determined according to the current attitude of the gimbal in the first mode. For example, when the gimbal is switched from the FPV mode to the tracking mode, in the FPV mode, the joint angles of the outer frame, the inner frame, and the middle frame of the gimbal are fixed; and in the tracking mode, the joint angles of the inner frame and the outer frame of the gimbal are fixed, but the joint angle of the middle frame of the gimbal is not fixed. Therefore, when switching the gimbal from the FPV mode to the tracking mode, the joint angle of the inner frame and the outer frame of the gimbal may remain fixed; that is, the pitch angle and the yaw angle of the gimbal may remain unchanged. The roll angle of the gimbal in the second mode can be determined according to the current attitude of the gimbal in the first mode. Of course, one or two angles of the gimbal may remain unchanged, while the other angles may be determined according to the current attitude of the gimbal in the first mode. The roll angle of the gimbal in the second mode can be determined according to the current attitude of the gimbal in the first mode. For example, when the gimbal is in the forward photographing mode, and it can be determined that the roll angle of the gimbal is within an error range of 0, optionally, the roll angle of the gimbal may be set to 0. When the gimbal is in the reverse photographing mode within the error range of π, optionally, the roll angle of the gimbal may be set to π. When the gimbal is in the left vertical photographing mode, the roll angle of the gimbal is set within the error range of π/2, optionally, the roll angle of the gimbal may be set to π/2. When the gimbal is in the right vertical photographing mode, the roll angle of the gimbal is set within error range of - π/2, optionally, the roll angle of the gimbal may be set to -π/2 The setting of the roll angle according to the attitude of the gimbal is not limited to the angles exemplified above, but may be other angle values. The embodiment of the present disclosure does not limit the manner of determining the second attitude angle in the second mode according to the current attitude of the gimbal in the first mode, as long as the switching of the gimbal from the first mode to the second mode does not cause abrupt changes to the image.

The roll angles of the gimbal are different in the forward photographing mode, reverse photographing mode, left vertical photographing mode and right vertical photographing mode, and the angles of the gimbal are also different. In order to effectively prevent abrupt changes to the roll angle of the gimbal from causing abrupt changes to the view angle when the gimbal is switched from the first mode to the second mode, in this embodiment of the present disclosure, by determining the current attitude of the gimbal and setting different roll angles for different modes, abrupt changes to image can be effectively prevented, thereby achieving a smooth switching of the gimbal from the first mode to the second mode.

After determining the current attitude of the gimbal in the first mode, in order to determine the second attitude angle of the gimbal in the second mode according to the first attitude angle, in a possible implementation manner, the gimbal mode switching method provided by the embodiments of the present disclosure may further include: if the current attitude of the gimbal is in the forward photographing mode, the second roll angle value of the second attitude angle may be determined to be 0, the second yaw angle may be determined to be the first yaw angle, and the second pitch angle may be determined to be the first pitch angle.

After determining the current attitude of the gimbal in the first mode, in order to determine the second attitude angle of the gimbal in the second mode according to the first attitude angle, in a possible implementation manner, the gimbal mode switching method provided by the embodiment of the present disclosure may further include: if the current attitude of the gimbal is in the reverse photographing mode, the second roll angle value of the second attitude angle may be determined to be π, the second yaw angle may be determined to be the first yaw angle, and the second pitch angle may be determined to be the first pitch angle.

After determining the current attitude of the gimbal in the first mode, in order to determine the second attitude angle of the gimbal in the second mode according to the first attitude angle, in a possible implementation manner, the gimbal mode switching method provided by the embodiments of the present disclosure may further include: if the current attitude of the gimbal is in the left vertical photographing mode, the second roll angle in the second attitude angle may be determined to be π/2, the second yaw angle may be determined to be the first yaw angle, and the second pitch angle may be determined to be the first pitch angle.

After determining the current attitude of the gimbal in the first mode, in order to determine the second attitude angle of the gimbal in the second mode according to the first attitude angle, in a possible implementation manner, the gimbal mode switching method provided by the embodiments of the present disclosure may further include: if the current attitude of the gimbal is in the right vertical photographing mode, the second roll angle in the second attitude angle may be determined to be -π/2, the second yaw angle may be determined to be the first yaw angle, and the second pitch angle may be determined to be the first pitch angle.

During the process of assigning a value to the second roll angle according to the current attitude of the gimbal, the pitch angle and the yaw angle of the gimbal may be slightly changed. For example, in the forward photographing mode, if the roll angle can be made 0 by controlling the joint angle of the middle frame joint, maintaining the joint angles of the inner frame and outer frame after switching the gimbal to the second mode, and only rotating the middle frame to make the roll angle 0, then since the joint angles of the inner frame and the outer frame remain unchanged, the pitch angle and the yaw angle may be slightly changed. Accordingly, a position of an object in the scene may change slightly. The reason is that axis of a ground coordinate system does not coincide with axis of the gimbal coordinate system, so that there may be certain mapping between the yaw angle and the pitch angle on the joint angle of the middle frame. In the process of assigning the second roll angle value to the gimbal, the pitch angle and yaw angle of the gimbal may be slightly changed. In the embodiments of the present disclosure, during the process of assigning the second pitch angle value and the second yaw angle of the gimbal, a specific deviation caused by the gimbal to the pitch angle and yaw angle when assigning values to the second roll angle may be calculated, and the second pitch angle value and the second yaw angle value may be assigned according to the specific deviation of the pitch angle and yaw angle. In an embodiment of the present disclosure, the second attitude angle of the gimbal in the second mode can be determined according to the first attitude angle and the current attitude of the gimbal in the first mode, which solves the problem of possible abrupt changes to the image when switching the gimbal from the first mode to the second mode.

In a possible implementation manner, the first mode of the gimbal is the FPV mode. In the FPV mode, the three joint angles are fixed. In order to implement a panoramic photographing of the gimbal in the FPV mode, the embodiments of the present disclosure may further include: in the FPV mode, receiving a user's panoramic photographing instruction; according to the panoramic photographing instruction, controlling the movement of the gimbal to the target joint angle to take multiple pictures at the target joint angle; and synthesizing a panoramic based on the multiple pictures.

The panoramic view of the gimbal in the FPV mode is that the gimbal takes a certain number of photos when the gimbal is at different joint angles, then synthesizes the certain number of photos into a panoramic picture. Since the panoramic picture is taken in the FPV mode, taking the panoramic picture may be implemented at any angle.

In the FPV mode, the user's panoramic photographing instruction may be received. The panoramic photographing instruction may include a target joint angle of the gimbal and a number of the captured pictures. The embodiment of the present disclosure does not limit on this. After receiving the user's panoramic photographing instruction, the gimbal controls the movement of the gimbal to the target joint angle according to the panoramic photographing instructions, and takes multiple pictures at the target joint angle. The target joint angle can be multiple target joint angles, and one or more pictures may be taken at each target joint angle. Based on the multiple pictures taken at the target joint angle, the multiple pictures can be synthesized into a panoramic picture.

In the FPV mode, the gimbal can implement not only the panoramic photographing, but also a story mode photographing. In order to implement the story mode photographing, the embodiments of the present disclosure may further include: in the FPV mode, receiving a user story photographing instruction; and according to the story photographing instruction, controlling the gimbal to move according to a predetermined path, and recording video under the predetermined path.

The story mode photographing of the gimbal in the FPV mode is that the gimbal moves according to the predetermined path to record video, to implement video recording at any angle or any viewing angle, which is suitable for recording a movement process.

In the FPV mode, the user's story photographing instruction can be received, and the story photographing instruction may include a predetermined path of the gimbal, a photographing duration, etc. This embodiment of the present disclosure does not limit this. After receiving the story photographing instruction, the gimbal moves according to the predetermined path according to the story photographing instruction to record video in the predetermined path, thereby achieving recording video at any angle or any view angle.

In the above embodiment, the mode switching method of the gimbal achieves a smooth switching of the gimbal from the first mode to the second mode of the gimbal. In order to smoothly switch the gimbal from the second mode to the first mode, and to solve the problem of losing the target when switching the gimbal from the second mode to the first mode. An embodiment of the present disclosure also provides a gimbal mode switching method. FIG. 5 is a schematic flowchart of the method for gimbal mode switching according to another embodiment of the present disclosure. As shown in FIG. 5, the method for gimbal mode switching provided by an embodiment of the present disclosure may include:
S501: Obtaining a user's mode switching instruction. The mode switching instruction is configured to switch the gimbal from the second mode to the first mode. A number of fixed joint angles in the first mode is greater than a number of fixed joint angles in the second mode.

S502: Determining a third attitude angle of the gimbal in the second mode, and determine a fourth attitude angle of the gimbal in the first mode according to the third attitude angle.

S503: Assigning an initial attitude to the gimbal in the first mode according to the fourth attitude angle to switch the gimbal from the second mode to the first mode.

In the gimbal mode switching method provided by the embodiment of the present disclosure, a user's mode switching instruction may be obtained, and the mode switching instruction configured to switch the gimbal from the second mode to the first mode. A number of fixed joint angles in the first mode is greater than a number of fixed joint angles in the second mode. A third attitude angle of the gimbal may be determined in the second mode, and a fourth attitude angle of the gimbal in the first mode may be determined according to the third attitude angle. An initial attitude may be assigned to the gimbal in the first mode, to switch the gimbal from the second mode to the first mode. In the present disclosure, not only the smooth switching of the gimbal from the second mode to the first mode can be implemented, but also a loss of the target may be prevented.

The undisclosed contents and effects of the embodiments of the present disclosure are the same as those of the above-mentioned embodiments. Reference may be made to the above-mentioned embodiments, and the detail will not be repeated.

The following is a device embodiment of the present disclosure, which can be used to execute the method embodiments of the present disclosure. For details not disclosed in the device embodiments of the present disclosure, reference may be made to the method embodiments of the present disclosure.

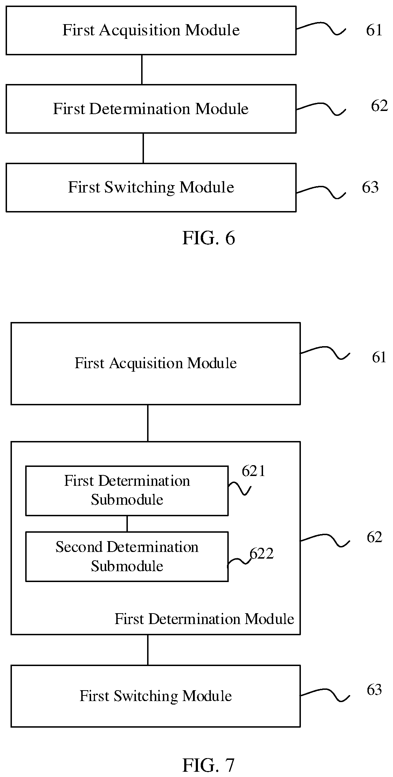

FIG. 6 is a schematic diagram of a gimbal mode switching device according to an embodiment of the present disclosure. The gimbal may be a two-axis gimbal, a three-axis gimbal, a four-axis gimbal, etc. As shown in FIG. 6, an embodiment of the present disclosure includes: a first acquisition module 61 configured to obtain a user's mode switching instruction, the mode switching instruction being configured to switch the gimbal from a first mode to a second mode, a number of fixed joint angles in the first mode being greater than a number of fixed joint angles in the second mode; a first determination module 62 configured to determine a first attitude angle of the gimbal in the first mode and determine a second attitude angle of the gimbal in the second mode according to the first attitude angle; and a first switching module 63 configured to perform value assignment with respect to an initial attitude of the gimbal in the second mode according to the second attitude angle, to switch the gimbal from the first mode to the second mode.

Optionally, FIG. 7 is a schematic diagram of the gimbal mode switching device according to another embodiment of the present disclosure. As shown in FIG. 7, the first determination module 62 includes: a first determination submodule 621 configured to determine a current attitude of the gimbal in the first mode; a second determination submodule 622 configured to determine a second attitude angle of the gimbal in the second mode according to the first attitude angle and the current attitude of the gimbal in the first mode.

Optionally, the first determination submodule 621 is specifically configured to: determine the current attitude of the gimbal in the first mode according to a mapping angle value of gravity in a preset axial direction at a set position of the gimbal.

Optionally, the preset axis includes one or more of: pitch axis, yaw axis, and roll axis.

Optionally, the set position may include any one of: a base, an outer frame, an inner frame, and a middle frame.

Optionally, the first determination submodule 621 is specifically configured to: according to the angle value of gravity mapped in the preset axial direction at the set position of the gimbal, determine whether the current attitude of the gimbal is in a horizontal photographing mode, a left vertical photographing mode, or a right vertical photographing mode.

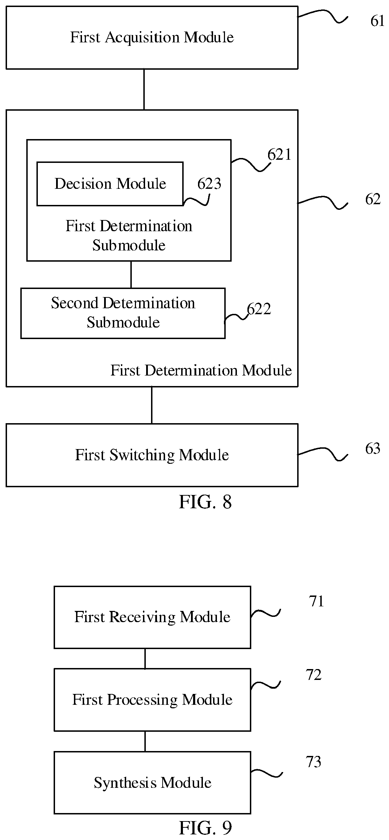

Optionally, FIG. 8 is a schematic diagram of the gimbal mode switching device according to another embodiment of the present disclosure. As shown in FIG. 8, the first determination submodule 621 further includes: a decision module 623 configured to determine whether the current attitude of the gimbal is in a forward photographing mode or a reverse photographing mode according to a tilt angle of the base if the current attitude of the gimbal is the horizontal photographing mode, and the tilt angle of the base is an angle between the base and the direction of gravity.

Optionally, the first determination submodule 621 is specifically configured to: if the angle value in the preset axial direction is within a first preset range, determine the current attitude of the gimbal to be in the horizontal photographing mode; if the angle value in the preset axial direction is within a second preset range, determine the current attitude of the gimbal to be in the left vertical photographing mode; and if the angle value in the preset axial direction is within a third preset range, determine the current attitude of the gimbal to be in the right vertical photographing mode.

Optionally, the determination module 623 is specifically configured to: if determining that the gimbal is in the horizontal photographing mode and the tilt angle of the base is greater than π/2, determine the current attitude of the gimbal to be in the forward photographing mode; and if determining that the gimbal is in the horizontal photographing mode and the tilt angle of the base is less than or equal to π/2, determine the current attitude of the gimbal to be in the reverse photographing mode.

Optionally, the second determination submodule 622 is specifically configured to: if the current attitude of the gimbal is in the left vertical photographing mode, determine a second roll angle of the second attitude angle to be π/2, a second yaw angle to be a first yaw angle, and a second pitch angle to be a first pitch angle.

Optionally, the second determination submodule 622 is specifically configured to: if the current attitude of the gimbal is in the right vertical photographing mode, the second roll angle of the second attitude angle may be determined to be -π/2, the second yaw angle may be determined to be the first yaw angle, and the second pitch angle may be determined to be the first pitch angle.

Optionally, the second determination submodule 622 is specifically configured to: if the current attitude of the gimbal is in the forward photographing mode, determine the second roll angle value of the second attitude angle to be 0, the second yaw angle to be the first yaw angle, and the second pitch angle to be the first pitch angle.

Optionally, the second determination submodule 622 is specifically configured to: if the current attitude of the gimbal is in the reverse photographing mode, determine the second roll angle value of the second attitude angle to be π, the second yaw angle to be the first yaw angle, and the second pitch angle to be the first pitch angle.

Optionally, the first switching module 63 is specifically configured to: perform angle compensation in the second mode, and control the gimbal to perform the following steps based on the second attitude angle.

Optionally, the first mode is the FPV mode, and the second mode is the tracking mode.

The number of the fixed joint angles of the gimbal in the FPV mode may be three, and the number of the fixed joint angles of the gimbal in the tracking mode may be one or two.

Optionally, FIG. 9 is a schematic diagram of the gimbal mode switching device according to another embodiment of the present disclosure. As shown in FIG. 9, the gimbal mode switching device provided by an embodiment of the present disclosure includes: a first receiving module 71 configured to receive a user's panoramic photographing instruction in the FPV mode; a first processing module 72 configured to control the gimbal to move to a target joint angle according to the panoramic photographing instruction and take multiple pictures at the target joint angle; a synthesis module 73 configured to synthesize a panoramic picture based on the multiple pictures.

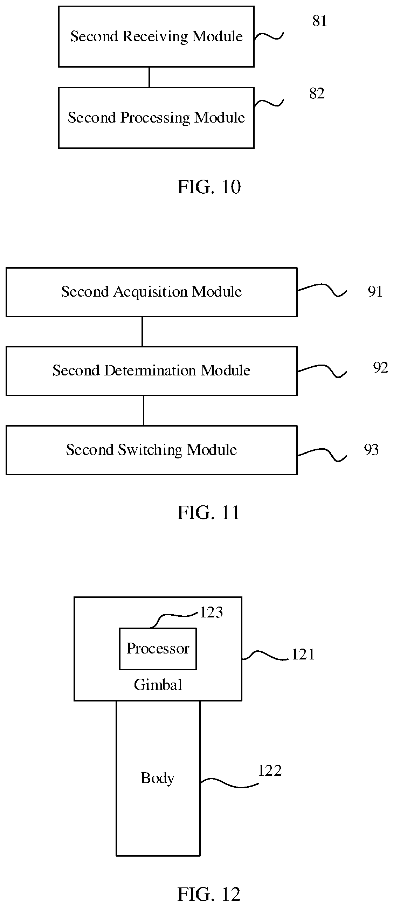

Optionally, FIG. 10 is a schematic diagram of the gimbal mode switching device according to another embodiment of the present disclosure. As shown in FIG. 10, the gimbal mode switching device provided by the embodiment of the present disclosure includes: a second receiving module 81 configured to receive a user story photographing instruction in the FPV mode; a second processing module 82 configured to control the gimbal to move in a predetermined path according to the story photographing instruction and record video in the predetermined path.

According to an embodiment of the present disclosure, a gimbal mode switching device is provided. FIG. 11 is a schematic diagram of the gimbal mode switching device according to another embodiment of the present disclosure. As shown in FIG. 11, the gimbal mode switching device provided by an embodiment of the present disclosure includes: a second acquisition module 91 configured to obtain a user's mode switching instruction, the mode switching instruction being configured to switch the gimbal from the second mode to the first mode, a number of fixed joint angles in the first mode being greater than a number of fixed joint angles in the second mode; a second determination module 92 configured to determine a third attitude angle of the gimbal in the second mode and a fourth attitude angle of the gimbal in the first mode according to the third attitude angle; and a second switching module 93 configured to assign an initial attitude to the gimbal in the first mode according to the fourth attitude angle, to switch the gimbal from the second mode to the first mode.

The undisclosed contents and effects of the embodiments of the present disclosure are the same as those of the above method embodiments. Reference may be made with the above method embodiments, which will not be repeated here.

An embodiment of the present disclosure provides a movable platform. FIG. 12 is a schematic structural diagram of a mobile platform according to an embodiment of the present disclosure. As shown in FIG. 12, the mobile platform provided by the embodiment of the present disclosure includes: a body 122; and a gimbal 121. The gimbal is disposed on the body, the gimbal 121 includes a processor 123. The processor 123 is configured to: obtain a user's mode switching instruction, the mode switching instruction being configured to switch the gimbal from the first mode to the second mode, a number of fixed joint angles in the first mode being greater than a number of fixed joint angles in the second mode; determine a first attitude angle of the gimbal in the first mode, and determine a second attitude angle of the gimbal in the second mode according to the first attitude angle; and perform value assignment with respect to an initial attitude of the gimbal in the second mode according to the second attitude angle to switch the gimbal from the first mode to the second mode.

The undisclosed contents and effects of the embodiments of the present disclosure are the same as those of the above method embodiments. References may be made to the above method embodiments, which will not be repeated here.

An embodiment of the present disclosure provides a computer-readable storage medium that stores a computer program, and the computer program can be executed by a processor to complete the gimbal mode switching method provided in any of the foregoing embodiments.

Finally, it should be noted that the above embodiments are only used to illustrate the technical solution of the present disclosure but not to limit the present disclosure. Although the present disclosure has been described in detail with reference to the foregoing embodiments, those of ordinary skill in the art should understand that the technical solutions described in the foregoing embodiments can still be modified, or some or all of the technical features can be equivalently substituted. However, these modifications or substitutions do not deviate the essence of the corresponding technical solutions from the range of the technical solution in the embodiments of the present disclosure.

## Claims

1. A gimbal mode switching method, comprising:
obtaining a mode switching instruction of a user, the mode switching instruction being configured to switch a gimbal from a first mode to a second mode, a number of fixed joint angles in the first mode being greater than a number of fixed joint angles in the second mode;
determining a first attitude angle of the gimbal in the first mode, and determining a second attitude angle of the gimbal in the second mode according to the first attitude angle; and
according to the second attitude angle, performing value assignment with respect to an initial attitude of the gimbal in the second mode to switch the gimbal from the first mode to the second mode.

2. The method according to claim 1, wherein determining the second attitude angle of the gimbal in the second mode according to the first attitude angle comprises:
determining a current attitude of the gimbal in the first mode; and
determining a second attitude angle of the gimbal in the second mode according to the first attitude angle and the current attitude of the gimbal in the first mode.

3. The method according to claim 2, wherein determining the current attitude of the gimbal in the first mode comprises:
determining the current attitude of the gimbal in the first mode according to an angle value of gravity mapped in a preset axial direction at a set position of the gimbal.

4. The method according to claim 3, wherein the preset axis comprises one or more of: pitch axis, yaw axis, and roll axis.

5. The method according to claim 3, wherein the set position of the gimbal comprises any one of: a base, an outer frame, an inner frame, and a middle frame.

6. The method according to claim 3, wherein determining the current attitude of the gimbal in the first mode comprises:
according to the angle value of gravity mapped in the preset axial direction at the set position of the gimbal, determining whether the current attitude of the gimbal is a horizontal photographing mode, a left vertical photographing mode, or a right vertical photographing mode.

7. The method according to claim 6, further comprises:
if determining that the current attitude of the gimbal is the horizontal photographing mode, determining whether the current attitude of the gimbal is a forward photographing mode or a reverse photographing mode according to a tilt angle of the base, the tilt angle of the base being an angle between the base and direction of gravity.

8. The method according to claim 6, wherein according to the angle value of gravity mapped in the preset axial direction at the set position of the gimbal, determining whether the current attitude of the gimbal is the horizontal photographing mode, the left vertical photographing mode, or the right vertical photographing mode comprises:
if the angle value in the preset axial direction is within a first preset range, determining the current attitude of the gimbal to be in the horizontal photographing mode;
if the angle value in the preset axial direction is within a second preset range, determining the current attitude of the gimbal to be in the left vertical photographing mode; and
if the angle value in the preset axial direction is within a third preset range, determining the current attitude of the gimbal to be in the right vertical photographing mode.

9. The method according to claim 7, comprising:
if determining that the gimbal is in the horizontal photographing mode and the tilt angle of the base is greater than π/2, determining the current attitude of the gimbal to be in the forward photographing mode; and
if determining that the gimbal is in the horizontal photographing mode and the tilt angle of the base is less than or equal to π/2, determining the current attitude of the gimbal to be in the reverse photographing mode.

10. The method according to claim 8, wherein determining a second attitude angle of the gimbal in the second mode according to the first attitude angle and the current attitude of the gimbal in the first mode comprises:
if the current attitude of the gimbal is in the left vertical photographing mode, determining a second roll angle of the second attitude angle to be π/2, a second yaw angle to be a first yaw angle, and a second pitch angle to be a first pitch angle.

11. The method according to claim 8, wherein determining the second attitude angle of the gimbal in the second mode according to the first attitude angle and the current attitude of the gimbal in the first mode comprises:
if the current attitude of the gimbal is in the right vertical photographing mode, determining a second roll angle of the second attitude angle to be -π/2, a second yaw angle to be a first yaw angle, and a second pitch angle to be a first pitch angle.

12. The method according to claim 9, wherein determining the second attitude angle of the gimbal in the second mode according to the first attitude angle and the current attitude of the gimbal in the first mode comprises:
if the current attitude of the gimbal is in the forward mode, determining a second roll angle value of the second attitude angle to be 0, a second yaw angle to be a first yaw angle, and a second pitch angle to be a first pitch angle.

13. The method according to claim 9, wherein determining the second attitude angle of the gimbal in the second mode according to the first attitude angle and the current attitude of the gimbal in the first mode comprises:
if the current attitude of the gimbal is in the reverse mode, determining a second roll angle value of the second attitude angle to be π, a second yaw angle to be a first yaw angle, and a second pitch angle to be a first pitch angle.

14. The method according to claim 1, wherein performing the value assignment with respect to the initial attitude of the gimbal in the second mode according to the second attitude angle to switch the gimbal from the first mode to the second mode comprises:
performing angle compensation in the second mode, and controlling the gimbal to perform a tracking operation based on the second attitude angle.

15. The method according to claim 1, wherein:
the first mode is a first person view (FPV) mode, and the second mode is a tracking mode; and
the number of the fixed joint angles of the gimbal in the FPV mode is three, and the number of the fixed joint angles of the gimbal in the tracking mode is one or two.

16. The method according to claim 15, further comprising:
in the FPV mode, receiving a panoramic photographing instruction of a user;
controlling the gimbal to move to a target joint angle according to the panoramic photographing instruction, and taking multiple pictures at the target joint angle; and
synthesizing a panoramic picture based on the multiple pictures.

17. The method according to claim 15, further comprising:
in the FPV mode, receiving a story photographing instruction of a user;
controlling the gimbal to move in a predetermined path according to the story photographing instruction to record video in the predetermined path.

18. A gimbal mode switching method, comprising:
obtaining a mode switching instruction of a user, the mode switching instruction being configured to switch a gimbal from a second mode to a first mode, a number of fixed joint angles in the first mode being greater than a number of fixed joint angles in the second mode;
determining a third attitude angle of the gimbal in the second mode, and determining a fourth attitude angle of the gimbal in the first mode according to the third attitude angle; and
according to the fourth attitude angle, performing value assignment with respect to an initial attitude of the gimbal in the first mode to switch the gimbal from the second mode to the first mode.

19. A gimbal mode switching device, comprising:
a first acquisition module configured to obtain a mode switching instruction of a user, and the mode switching instruction being configured to switch a gimbal from a first mode to a second mode, and a number of fixed joint angles in the first mode being greater than a number of fixed joint angles in the second mode;
a first determination module configured to determine a first attitude angle of the gimbal in the first mode and a second attitude angle of the gimbal in the second mode according to the first attitude angle; and
a first switching module configured to perform value assignment with respect to an initial attitude of the gimbal in the second mode according to the second attitude angle to switch the gimbal from the first mode to the second mode.

20. The device according to claim 19, wherein the first determination module comprises:
a first determination submodule configured to determine a current attitude of the gimbal in the first mode; and
a second determination submodule configured to determine a second attitude angle of the gimbal in the second mode according to the first attitude angle and the current attitude of the gimbal in the first mode.

21. The device according to claim 20, wherein the first determination submodule is specifically configured to:
determine the current attitude of the gimbal in the first mode according to an angle value of gravity mapped in a preset axial direction at a set position of the gimbal.

22. The device according to claim 21, wherein the preset axis comprises one or more of: pitch axis, yaw axis, and roll axis.

23. The device according to claim 21, wherein the set position of the gimbal comprises any one of: a base, an outer frame, an inner frame, and a middle frame.

24. The device according to claim 21, wherein the first determination sub-module is specifically configured to:
according to the angle value of gravity mapped in the preset axial direction at the position of the gimbal, determine whether the current attitude of the gimbal is in a horizontal photographing mode, a left vertical photographing mode, or a right vertical photographing mode.

25. The device according to claim 24, wherein the first determination submodule further comprises a determination module, the determination module being configured to determine whether the current attitude of the gimbal is in the horizontal photographing mode, and determine whether the current attitude of the gimbal is a forward photographing mode or a reverse photographing mode according to a tilt angle of the base, the tilt angle of the base being an angle between the base and direction of gravity.

26. The device according to claim 24, wherein the first determination submodule is specifically configured to:
if the angle value in the preset axial direction is within a first preset range, determine the current attitude of the gimbal to be in the horizontal photographing mode;
if the angle value in the preset axial direction is within a second preset range, determine the current attitude of the gimbal to be in the left vertical photographing mode; and
if the angle value in the preset axial direction is within a third preset range, determine the current attitude of the gimbal to be in the right vertical photographing mode.

27. The device according to claim 25, wherein the determination module is specifically configured to:
if determining that the gimbal is in the horizontal photographing mode and the tilt angle of the base is greater than π/2, determine the current attitude of the gimbal to be in the forward photographing mode; and
if determining that the gimbal is in the horizontal photographing mode, and the tilt angle of the base is less than or equal to π/2, determine that the current attitude of the gimbal to be in the reverse photographing mode.

28. The device according to claim 26, wherein the second determination submodule is specifically configured to:
if the current attitude of the gimbal is in the left vertical photographing mode, determine a second roll angle of the second attitude angle to be π/2, a second yaw angle to be a first yaw angle, and a second pitch angle to be a first pitch angle.

29. The device according to claim 26, wherein the second determination submodule is specifically configured to:
if the current attitude of the gimbal is in the right vertical photographing mode, determine a second roll angle of the second attitude angle to be -π/2, a second yaw angle to be a first yaw angle, and a second pitch angle to be a first pitch angle.

30. The device according to claim 27, wherein the second determination submodule is specifically configured to:
if the current attitude of the gimbal is in the forward mode, determine a second roll angle value of the second attitude angle to be 0, a second yaw angle to be a first yaw angle, and a second pitch angle to be a first pitch angle.

31. The device according to claim 27, wherein the second determination submodule is specifically configured to:
if the current attitude of the gimbal is in the reverse mode, determine the second roll angle of the second attitude angle to be π, a second yaw angle to be a first yaw angle, and a second pitch angle to be first pitch angle.

32. The device according to claim 19, wherein the first switching module is specifically configured to:
perform angle compensation in the second mode, and control the gimbal to perform a tracking operation based on the second attitude angle.

33. The device according to claim 19, wherein:
the first mode is an FPV mode and the second mode is a tracking mode; and
the number of the fixed joint angles of the gimbal in the FPV mode is three, and the number of the fixed joint angles of the gimbal in the tracking mode is one or two.

34. The device according to claim 33, further comprising:
a first receiving module configured to receive a panoramic photographing instruction of a user in the FPV mode;
a first processing module configured to control the gimbal to move to a target joint angle according to the panoramic photographing instruction and take multiple pictures at the target joint angle; and
a synthesizing module configured to synthesize the panoramic picture according to the multiple pictures.

35. The device according to claim 33, further comprising:
a second receiving module configured to receive a story photographing instruction of a user in the FPV mode; and
a second processing module configured to control the gimbal to move in a predetermined path according to the story photographing instruction to record video under in the predetermined path.

36. A gimbal mode switching device, comprising:
a second acquisition module configured to obtain a mode switching instruction of a user, the mode switching instruction being configured to switch a gimbal from a second mode to a first mode, and a number of fixed joint angles in the first mode being greater than a number of fixed joint angles in the second mode;
a second determination module configured to determine a third attitude angle of the gimbal in the second mode, and determine a fourth attitude angle of the gimbal in the first mode according to the third attitude angle; and
a second switching module configured to perform value assignment with respect to an initial attitude of the gimbal in the first mode according to the fourth attitude angle to switch the gimbal from the second mode to the first mode.

37. A mobile platform, comprising:
a body; and
a gimbal, the gimbal being disposed on the body, the gimbal comprises a processor, the processor being configured to:
obtain a mode switching instruction of a user, the mode switching instruction being configured to switch the gimbal from a first mode to a second mode, a number of fixed joint angles in the first mode being greater than a number of fixed joint angles in the second mode;
determine a first attitude angle of the gimbal in the first mode, and determine a second attitude angle of the gimbal in the second mode according to the first attitude angle; and
according to the second attitude angle, perform value assignment with respect to an initial attitude of the gimbal in the second mode to switch the gimbal from the first mode to the second mode.

38. A computer-readable storage medium storing a computer program, wherein the computer program is executable by a processor to complete the gimbal mode switching method according to any one of claims 1-17.
